# EUROPÄISCHE PATENTSCHRIFT

(11) **EP 2 314 141 B1**
(45) Veröffentlichungstag und Bekanntmachung des Hinweises auf die Patenterteilung: **02.10.2013**
(21) Anmeldenummer: 10007711.4
(22) Anmeldetag: 24.07.2010
(51) Int. Cl.: A01B 35/26

(54) **Bodenbearbeitungsgerät mit zwei Zinkenreihen**
Soil cultivation device with two rows of teeth
Appareil de traitement du sol doté de deux séries de pointes

(30) Priorität: 07.08.2009 DE 102009036651
(43) Veröffentlichungstag der Anmeldung: 27.04.2011
(73) Patentinhaber: Lemken GmbH & Co. KG, 46519 Alpen (DE)
(72) Erfinder: Maas, Ludger, 47665 Sonsbeck (DE); Karsten, Sebastian, 47608 Geldern (DE); Happe, Christoph, 46519 Alpen (DE); Achten, Georg, 47918 Tönisvorst (DE); Paschek, Wilhelm, 46519 Alpen (DE)
(74) Vertreter: Schulte & Schulte

(56) Entgegenhaltungen:
- DE-A1- 3 731 462
- DE-C- 833 870
- FR-A- 737 247
- FR-A1- 2 806 869
- US-A- 2 178 469
- US-A- 3 556 227

## Beschreibung

Die Erfindung betrifft ein Bodenbearbeitungsgerät mit zwei Zinkenreihen mit Zinken gemäß dem Oberbegriff des Patentanspruches 1. Ein Bodenbearbeitungsgerät mit einer Zinkenreihe oder mit zwei Zinkenreihen ist zum Beispiel der deutschen Offenlegungsschrift DE 37 31 462 A1 zu entnehmen. Der Gegenstand dieser Patentanmeldung betrifft ein entsprechendes Bodenbearbeitungsgerät, das mit breit arbeitenden Werkzeugeinheiten ausgerüstet ist. Diese Werkzeugeinheiten weisen auch Flügelschare auf, die mit Führungsblechen ausgerüstet sind. Diese Führungsbleche haben die Aufgabe, den Bodenaufwurf, der sich zwischen den Zinken einer Zinkenreihe bildet, wieder in die Scharfurchen zurückzuleiten, um eine möglichst ebene Oberfläche des Ackers zu erzielen. Eine Lehre, wie die Führungsbleche zu den Scharspitzen und Flügelscharen definitiv anzuordnen sind, ist dieser Anmeldung nicht zu entnehmen. Um bei einem Bodenbearbeitungsgerät mit zwei Zinkenreihen Verstopfungen zu vermeiden, soll vorzugsweise nur eine Zinkenreihe mit Führungsblechen ausgerüstet werden. Ein derartig ausgerüstetes Bodenbearbeitungsgerät kann kein gutes und gleichmäßiges Bearbeitungsergebnis auf dem Acker hinterlassen, da die Zinkenreihen im Abstand zu dicht zueinander angeordnet sind und die hintere Zinkenreihe in dem Ausrüstungszustand nicht in der Lage ist, den Bodenaufwurf der eigenen und der vorderen Zinkenreihe einzuebnen bzw. zu bearbeiten. Verstopfungen können so nicht vermieden werden.

Aufgabe der Erfindung ist es, ein kompaktes Bodenbearbeitungsgerät zu schaffen, das den Boden ganzflächig und intensiv bearbeitet, den Boden möglichst gleichmäßig einebnet und möglichst verstopfungsfrei arbeitet.

Die Aufgabe wird gemäß dem kennzeichnenden Teil des Anspruchs 1 gelöst.

Durch die angepasste Anordnung der Führungsbleche der hinteren Zinkenreihe in Relation zu den Führungsblechen der vorderen Zinkenreihe wird den unterschiedlichen Anforderungen an die Führungsbleche der vorderen und der hinteren Zinkenreihe Rechnung getragen. Die Führungsbleche der vorderen Zinkenreihe sind so angeordnet, dass sie ein optimales Bodenbearbeitungsergebnis hinterlassen. Die Führungsbleche der hinteren Zinkenreihe sind so angeordnet, dass sie neben dem optimalen Arbeitsergebnis auch sicherstellen, dass sie weitestgehend nicht von dem Bodenaufwurf der vorderen Zinkenreihe in Mitleidenschaft gezogen werden. So werden Verstopfungen sicher vermieden.

Die Erfindung sieht weiter vor, dass der Abstand zwischen den Führungsblechen der vorderen Zinkenreihe zwischen 3 cm und 10 cm größer ist als der Abstand zwischen den Führungsblechen der hinteren Zinkenreihe, vorzugsweise 4 cm bis 8 cm. Durch den deutlich größeren Abstand zwischen den Führungsblechen der hinteren Zinkenreihe in Relation zu dem Abstand der Führungsbleche der vorderen Zinkenreihe kommen die hinteren Führungsbleche nur bedingt in Kontakt mit dem Bodenauswurf, den die vordere Zinkenreihe hinterlassen hat. Der Bodenaufwurf der vorderen Zinkenreihe wird zwar durch die vorderen Zusatzleitbleche überwiegend wieder in die Scharfurche zurückgefördert, allerdings verbleibt im Randbereich der Flügelschare der vorderen Zinkenreihe ein Restbodenaufwurf. Die hinteren Führungsbleche befinden sich aber in einer Position, die sicherstellt, dass der verbliebene Bodenaufwurf der ersten Zinkenreihe weitestgehend nicht von ihnen erfasst wird. Nur soviel Bodenaufwurf der vorderen Zinkenreihe erreicht die Führungsbleche der hinteren Zinkenreihe, dass keine Verstopfungen zu befürchten sind.

Es wird außerdem vorgeschlagen, dass die Werkzeugeinheiten mit Flügelscharen neben den Führungsblechen aus einer Scharspitze und einem daran angrenzenden Leitblech bestehen. In bekannter Weise können so alle verschlissenen Komponenten bei Bedarf individuell ausgetauscht werden. Flügelschar, Leitblech und Scharspitze sind nur mittelbar miteinander verbunden und nicht zu einem Teil zusammengefasst.

Was die Anordnung der Zinken betrifft, ist außerdem vorgesehen, dass die Zinken einer Zinkenreihe möglichst auf einer Linie angeordnet sind und einen Abstand zueinander von 80 cm bis 100 cm aufweisen. Damit das Bodenbearbeitungsgerät besonders kompakt ausgebildet sein kann, ist es von Vorteil, dass die Zinken einer Zinkenreihe nicht in Fahrtrichtung zueinander versetzt angeordnet sind, sondern auf einer Linie. Wenn die hintere Zinkenreihe auf einer Linie und im optimalen Abstand zur vorderen Reihe angeordnet ist, ist von der Baulänge der optimale Zustand der Zinken zueinander erreicht. Der Abstand der Zinken einer Zinkenreihe zueinander soll 80 cm bis 100 cm betragen. Dieser Abstand entspricht einem Strichabstand von 40 cm bis 50 cm, der hinsichtlich Bauteilbelastung, Bodendurchgang, Kombinationsmöglichkeiten bei unterschiedlichen Arbeitsbreiten und Arbeitseffekt ein Optimum darstellt.

Die Erfindung sieht weiter vor, dass das Bodenbearbeitungsgerät als Grubber mit zwei Balken ausgebildet ist, wobei die Zinken der vorderen Zinkenreihe dem vorderen Balken und die Zinken der hinteren Zinkenreihe dem hinteren Balken zugeordnet sind und dass der Abstand zwischen der vorderen Zinkenreihe und der hinteren Zinkenreihe mindestens 70 cm beträgt.
Die Zinken einer Zinkenreihe an einem Balken anzuordnen, hat insbesondere fertigungstechnische und auch freiraumtechnische Vorteile. Ein Abstand zwischen der vorderen Zinkenreihe und der hinteren Zinkenreihe von mehr als 70 cm stellt sicher, dass alle systembedingten Freiraumvorteile auch genutzt werden können. Ist der Balkenabstand zu klein, kann keine verstopfungsfreie Bodenbearbeitung erzielt werden.

Nach einer weiteren vorteilhaften Ausführungsform der Erfindung ist daran gedacht, dass die Schnittbreite der Flügelschare größer ist als der Strichabstand der Zinken. Die Flügelschare schneiden etwas breiter als für den gegebenen Strichabstand erforderlich. Die dadurch bedingte überlappende Bearbeitung des Bodens stellt sicher, dass alle Wurzeln oder Pflanzen von den Flügelscharen erfasst und vom Unterboden abgetrennt werden. Dabei ist es denkbar, dass die Flügelschare der vorderen Zinkenreihe etwas breiter arbeiten als die Flügelschare der hinteren Zinkenreihe oder auch umgekehrt. In jedem Fall ist aber eine überlappende Bearbeitung des Bodens durch die Flügelschare sichergestellt.

Zusätzlich ist es vorteilhaft, wenn die Flügelschare mehrteilig ausgebildet sind und vorzugsweise aus einem linken Scharteil und aus einem rechten Scharteil bestehen. Um sicherzustellen, dass mit dem Bodenbearbeitungsgerät möglichst kostengünstig und effizient gearbeitet werden kann, können die einzelnen Scharteile des jeweiligen Flügelschares bei Verschleiß oder Beschädigung individuell ausgetauscht werden.

Es ist weiter vorgesehen, dass die Führungsbleche schräg nach hinten ansteigend und die Erde nach oben und nach innen in die Scharfurche umlenkend ausgebildet sind. Diese Ausführungsform der Führungsbleche sorgt dafür, dass die Erde überwiegend in die Scharfurche zurückgeführt wird. Nur ein geringer Bodenaufwurf bildet sich zwischen den Zinken einer Zinkenreihe, der aber für die nachfolgende Zinkenreihe zu keinen Verstopfungsproblemen führt.

Die Erfindung sieht weiter vor, dass die Führungsbleche mit einer Kunststoff- oder einer Keramikschicht beschichtet sind. Zur Verbesserung der Eigenschaften eines Führungsbleches aus Stahl kann bei Bedarf das Führungsblech mit klebeunanfälligem Kunststoff oder besonders verschleißfestem Keramikmaterial beschichtet werden. Dies verbessert dann die Verstopfungsunanfälligkeit oder auch die Standzeit eines Führungsbleches. Streifenförmige Führungsbleche oder Führungsbleche aus Kunststoff sind ebenfalls denkbar.

Ergänzend ist daran gedacht, dass zwischen den Bearbeitungsstreifen der Zinken der hinteren Zinkenreihe und hinter der hinteren Zinkenreihe den Boden einebnende Egalisierungswerkzeuge vorgesehen sind, die vorzugsweise aus runden oder gezackten Hohlscheiben bestehen, die versetzt zueinander angeordnet sind und dass hinter den Hohlscheiben eine Walze angeordnet ist, die die Zinken in der Arbeitstiefe führen.

Um das Bodenbearbeitungsergebnis noch zu verbessern, sind Egalisierungswerkzeuge vorgesehen, die die verbliebenen Bodenaufwurfstreifen einebnen. Als bevorzugte Egalisierungswerkzeuge sind Hohlscheiben vorgesehen, die versetzt zueinander angeordnet sind. Hinter den Egalisierungswerkzeugen ist eine Walze angeordnet, die die Zinken in der Arbeitstiefe führt und zusätzlich noch den Boden bearbeitet. Dabei sind unterschiedliche Walzenvarianten denkbar, die mehr oder weniger krümeln und aus einem oder mehreren Walzenkörpern bestehen.

Die Erfindung sieht weiter vor, dass die Werkzeugeinheiten mit Scharspitze, Flügelschar mit Führungsblechen und dem Leitblech einem Scharfuß zugeordnet sind, der über eine Schnellwechseleinrichtung mit dem Zinken schnell wechselbar verbunden ist. Je nach Einsatzfall kann so eine Werkzeugeinheit in wenigen Minuten gegen eine anders bestückte Werkzeugeinheit ausgetauscht werden. Denkbar ist der schnelle Wechsel von einer Werkzeugeinheit, die für die tiefe Bodenbearbeitung bestens geeignet ist, auf eine Werkzeugeinheit, die anders bestückt ist und so für die flache Bodenbearbeitung oder für andere spezielle Anwendungen bestens geeignet ist.

Weitere Einzelheiten der Erfindung sind den Figuren und der Figurenbeschreibung zu entnehmen. Es zeigen:
- Figur 1: eine Vorderansicht eines Bodenbearbeitungsgerätes,
- Figur 2: die Anordnung der Werkzeugeinheiten des Bodenbearbeitungsgerätes und
- Figur 3: eine Seitenansicht eines Teils des Bodenbearbeitungsgerätes.

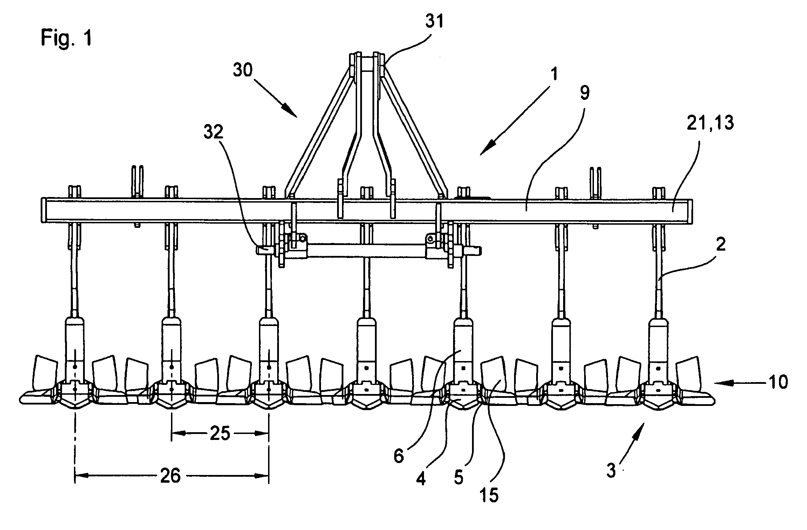

Figur 1 zeigt eine Vorderansicht des Bodenbearbeitungsgerätes 1 mit dem Anbauturm 30 mit dem oberen Anbaupunkt 31 und den unteren Anbaupunkten 33. Über diese Anbaupunkte 31 und 33 kann das hier dargestellte Bodenbearbeitungsgerät an das Dreipunktgestänge eines hier nicht dargestellten Traktors angebaut werden. Das Bodenbearbeitungsgerät 1 weist zwei Balken 13 auf, an denen die Zinken 2 der Zinkenreihe 10 befestigt sind. Sichtbar ist in der Figur 1 nur der vordere Balken 21. Der hintere Balken 22 wird durch den vorderen Balken 21 verdeckt. Die Balken 13 bzw. 21 und 22 sind Bestandteil des Rahmens 9. Die Zinken 2 sind mit Werkzeugeinheiten 3 ausgerüstet. Jede Werkzeugeinheit 3 besteht hier aus einer Scharspitze 4, einem Flügelschar 5 und einem Leitblech 6. In dem dargestellten Beispiel besteht die Werkzeugeinheit 3 aus der separaten Scharspitze 4, dem separaten Leitblech 6, einem zweiteiligen Flügelschar 5 mit einem linken Scharteil 18 und einem rechten Scharteil 19 mit daran befestigten Führungsblechen 15. Um den Bodenfluss zu verbessern, ist das jeweilige Führungsblech 15 am jeweiligen Scharteil 18,19 des Flügelschares 5 fest integriert und nicht angeschraubt oder nicht in anderer Form lösbar damit befestigt. Ohne eine Stufe zu bilden, geht das Flügelschar 5 hinten organisch in das Führungsblech 15 über. Bei dem Bodenbearbeitungsgerät 1 gemäß Figur 1 sind sieben Zinken 2 vorgesehen, wovon drei Zinken 2 dem vorderen Balken 21 zugeordnet sind und vier Zinken 2 dem hinteren Balken 22, der durch den Balken 21 in der Figur 1 verdeckt wird. Abhängig von der Arbeitsbreite des Bodenbearbeitungsgerätes 1 beträgt der Strichabstand 25 der Zinken 2 zueinander 40 bis 50 cm und der Abstand 26 der Zinken 2 zueinander auf einem Balken 80 bis 100 cm.

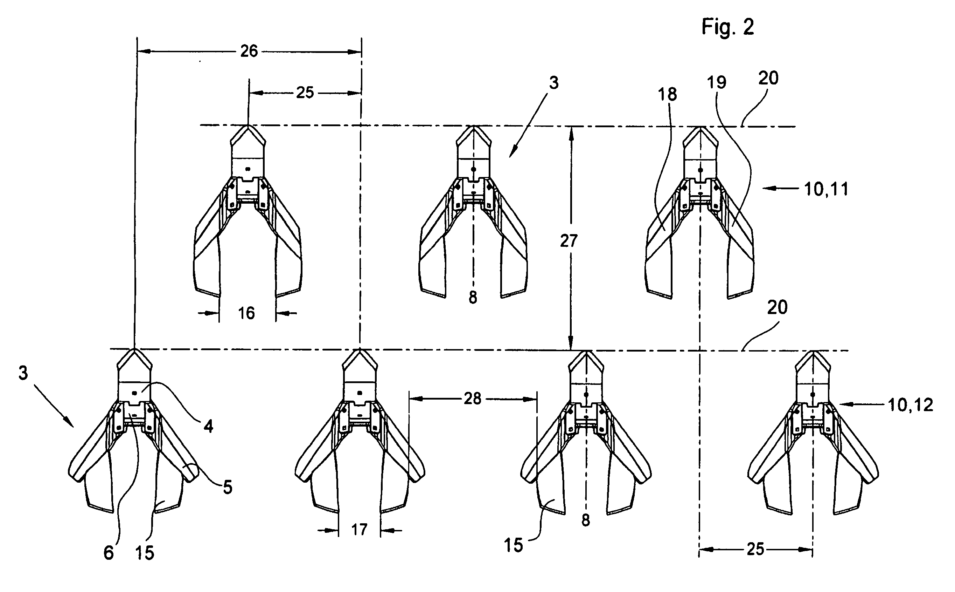

Figur 2 zeigt die Anordnung der Werkzeugeinheiten 3 des Bodenbearbeitungsgerätes 1. Jede Werkzeugeinheit 3 ist mit einer Scharspitze 4, Flügelscharen 5 mit Führungsblechen 15 und einem Leitblechen 6 ausgerüstet. Wie bereits erwähnt, besteht das Bodenbearbeitungswerkzeug 1 aus 2 Zinkenreihen 10, einer vorderen Zinkenreihe 11 und einer hinteren Zinkenreihe 12. Die hintere Zinkenreihe 12 ist im Abstand 27 zur vorderen Zinkenreihe 11 angeordnet. Um Verstopfungen weitestgehend zu vermeiden, wurde ein Abstand 27 von 70 cm und mehr vorgesehen. Die Zinken 2 der beiden Zinkenreihen 10 bzw. der Zinkenreihen 11 und 12 sind jeweils auf einer Linie 20 angeordnet. Die Führungsbleche 15 der Flügelschare 5 einer Werkzeugeinheit 3 weisen in der vorderen Zinkenreihe 11 einen großen Abstand 16 auf, z.B. 28 cm. Die Führungsbleche 15 der Flügelschare 5 der Werkzeugeinheiten 3 der hinteren Zinkenreihe 12 weisen einen deutlich geringeren Abstand 17 auf, z. B. 21 cm. Dabei ist der Abstand 17 so gewählt, dass ein gutes Bodenbearbeitungsergebnis erzielt wird, aber ein großer Freiraum 28 zwischen den Führungsblechen 15 von zwei benachbarten Zinken entsteht. Die Führungsbleche 15 eines Zinkens 2 sind jeweils links und rechs von der Mitte 8 des jeweiligen Flügelschares im gleichen Abstand angeordnet. Die Flügelschare 5 der vorderen Zinkenreihe 11 weisen eine schmalere Schnittbreite auf als die Flügelschare 5 der hinteren Zinkenreihe. Die Flügelschare 5 der vorderen Zinkenreihe 11 können auch die gleiche Schnittbreite aufweisen wie die Flügelschare 5 der hinteren Zinkenreihe oder sogar länger sein.

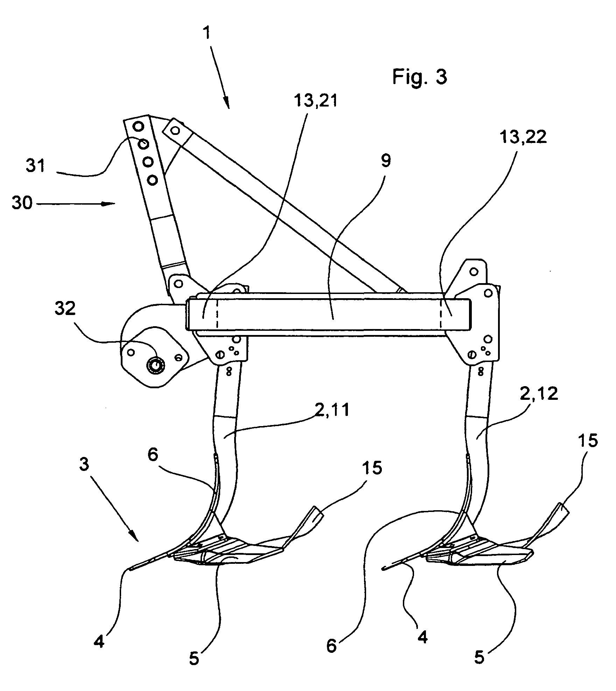

Figur 3 zeigt eine Seitenansicht eines Teils des Bodenbearbeitungsgerätes 1. Zusatzwerkzeuge wie Egalisierungswerkzeuge oder Walzen wurden aus Gründen der Übersichtlichkeit in der Figur 3 nicht dargestellt. Sie sind aber auch wesentlicher Bestandteil des Bodenbearbeitungsgerätes 1 und seiner Funktion. Vorne befindet sich der Anbauturm 30 mit den Anbaupunkten 31 und 32. Der Rahmen 9 trägt die Balken 13 mit den Zinkenreihen 11 und 12, an denen die Zinken 2 befestigt sind. Jede Zinkenreihe 10 ist einem Balken 13 zugeordnet, die vordere Zinkenreihe 11 dem vorderen Balken 21 und die Zinkenreihe 12 dem hinteren Balken 22. Jeder Zinken 2 trägt eine Werkzeugeinheit 3 mit Scharspitze 4, Flügelschare 5 mit Führungsblechen 15 und ein Leitblech 6.

## Patentansprüche

1. Bodenbearbeitungsgerät (1) mit zwei Zinkenreihen (10) mit Zinken (2), die mit breit arbeitenden Werkzeugeinheiten (3) mit Flügelscharen (5) ausgerüstet sind, wobei Führungsbleche (15) vorgesehen sind, die im Abstand zur Mitte (8) der Flügelschare (5) links und rechts am Flügelschar (5) angeordnet sind,
**dadurch gekennzeichnet,**
**dass** das Bodenbearbeitungsgerät (1) mit einer vorderen Zinkenreihe (11) und einer hinteren Zinkenreihe (12) ausgerüstet ist und dass der Abstand (16) zwischen den Führungsblechen (15) eines Zinkens (2) mit Flügelscharen (5) der vorderen Zinkenreihe (11) größer ist als der Abstand (17) zwischen den Führungsblechen (15) eines Zinkens (2) mit Flügelscharen (5) der hinteren Zinkenreihe (12).

2. Bodenbearbeitungsgerät nach Anspruch 1,
**dadurch gekennzeichnet,**
**dass** der Abstand (16) zwischen den Führungsblechen (15) der vorderen Zinkenreihe (11) zwischen 3 cm und 10 cm größer ist als der Abstand (17) zwischen den Führungsblechen (15) der hinteren Zinkenreihe (12), vorzugsweise 4 cm bis 8 cm.

3. Bodenbearbeitungsgerät nach Anspruch 1,
**dadurch gekennzeichnet,**
**dass** die Werkzeugeinheiten (3) mit Flügelscharen (5) neben den Führungsblechen (15) aus einer Scharspitze (4) und einem daran angrenzenden Leitblech (6) bestehen.

4. Bodenbearbeitungsgerät nach Anspruch 1,
**dadurch gekennzeichnet,**
**dass** die Zinken (2) einer Zinkenreihe (10) möglichst auf einer Linie (20) angeordnet sind und einen Abstand (26) zueinander von 80 cm bis 100 cm aufweisen.

5. Bodenbearbeitungsgerät nach Anspruch 1,
**dadurch gekennzeichnet,**
**dass** das Bodenbearbeitungsgerät (1) als Grubber mit zwei Balken (13) ausgebildet ist, wobei die Zinken (2) der vorderen Zinkenreihe (11) dem vorderen Balken (21) und die Zinken (2) der hinteren Zinkenreihe (12) dem hinteren Balken (22) zugeordnet sind und dass der Abstand (27) zwischen der vorderen Zinkenreihe (11) und der hinteren Zinkenreihe (12) mindestens 70 cm beträgt.

6. Bodenbearbeitungsgerät nach Anspruch 1,
**dadurch gekennzeichnet,**
**dass** die Schnittbreite der Flügelschare (5) eines Zinkens (2) größer ist als der Strichabstand (25) der Zinken (2).

7. Bodenbearbeitungsgerät nach Anspruch 1,
**dadurch gekennzeichnet,**
**dass** die Flügelschare (5) mehrteilig ausgebildet sind und vorzugsweise aus einem linken Scharteil (18) und aus einem rechten Scharteil (19) bestehen.

8. Bodenbearbeitungsgerät nach Anspruch 1,
**dadurch gekennzeichnet,**
**dass** die Führungsbleche (15) schräg nach hinten ansteigend und die Erde nach oben und nach innen in die Scharfurche umlenkend ausgebildet sind.

9. Bodenbearbeitungsgerät nach Anspruch 1,
**dadurch gekennzeichnet,**
**dass** die Führungsbleche (15) mit einer Kunststoff- oder mit einer Keramikschicht beschichtet hergestellt sind.

10. Bodenbearbeitungsgerät nach Anspruch 1,
**dadurch gekennzeichnet,**
**dass** zwischen den Bearbeitungsstreifen der Zinken (2) der hinteren Zinkenreihe (12) und hinter der hinteren Zinkenreihe (12) den Boden einebnende Egalisierungswerkzeuge vorgesehen sind, die vorzugsweise aus runden oder gezackten Hohlscheiben bestehen, die versetzt zueinander angeordnet sind und dass hinter den Hohlscheiben eine Walze angeordnet ist, die die Zinken (2) in der Arbeitstiefe führen.

11. Bodenbearbeitungsgerät nach Anspruch 1,
**dadurch gekennzeichnet,**
**dass** die Werkzeugeinheiten (3) mit Scharspitze (4), Flügelscharen (5) mit Führungsblechen (15) und dem Leitblech (6) einem Scharfuß zugeordnet sind, der über eine Schnellwechseleinrichtung mit dem Zinken (2) schnell wechselbar verbunden ist.

## Claims

1. Soil cultivation implement (1) with two rows of tines (10) with tines (2) that are equipped with wide working tool units (3) with winged shares (5), whereby guide panels (15) are provided that are arranged at a distance to the middle (8) of the winged shares (5) on the left and right on the winged share (5),
**characterised by** the fact
that the soil cultivation implement (1) is equipped with a front row of tines (11) and a rear row of tines (12) and that the clearance (16) between the guide panels (15) of a tine (2) with winged shares (5) in the front row of tines (11) is greater than the clearance (17) between the guide panels (15) of a tine (2) with winged shares (5) in the rear row of tines (12).

2. Soil cultivation implement in accordance with Claim 1,
**characterised by** the fact
that the clearance (16) between the guide panels (15) of the front row of tines (11) is between 3 cm and 10 cm greater than the clearance (17) between the guide panels (15) of the rear row of tines (12), preferably 4 cm to 8 cm.

3. Soil cultivation implement in accordance with Claim 1,
**characterised by** the fact
that the tool units (3) with winged shares (5) along with the guide panels (15) consist of a share peak (4) and an adjoining guide plate (6).

4. Soil cultivation implement in accordance with Claim 1,
**characterised by** the fact
that the tines (2) in a row of tines (10) are arranged as far as possible in a line (20) and have a clearance (26) to one another of 80 cm to 100 cm.

5. Soil cultivation implement in accordance with Claim 1,
**characterised by** the fact
that the soil cultivation implement (1) is formed as a cultivator with two beams (13), whereby the tines (2) of the front row of tines (11) are assigned to the front beam (21) and the tines (2) of the rear row of tines (12) are assigned to the rear beam (22) and that the clearance (27) between the front row of tines (11) and the rear row of tines (12) amounts to at least 70 cm.

6. Soil cultivation implement in accordance with Claim 1,
**characterised by** the fact
that the cutting width of the winged shares (5) of a tine (2) is greater than the tine spacing (25) of the tines (2).

7. Soil cultivation implement in accordance with Claim 1,
**characterised by** the fact
that the winged shares (5) are multipart and consist preferably of a left share part (18) and of a right share part (19).

8. Soil cultivation implement in accordance with Claim 1,
**characterised by** the fact
that the guide panels (15) are formed to rise at an angle backwards and to divert the earth up and to the inside in the share furrow.

9. Soil cultivation implement in accordance with Claim 1,
**characterised by** the fact
that the guide panels (15) are manufactured coated with a plastic or with a ceramic coating.

10. Soil cultivation implement in accordance with Claim 1,
**characterised by** the fact
that between the working strips of the tines (2) of the rear row of tines (12) and behind the rear row of tines (12) ground levelling tools are provided that consist preferably of round or serrated hollow discs that are arranged offset to each other and that a roller is arranged behind the hollow discs that guides the tines (2) in the working depth.

11. Soil cultivation implement in accordance with Claim 1,
**characterised by** the fact
that the tool units (3) with share point (4), winged shares (5) with guide panels (15) and the guide plate (6) are assigned to a share foot that is connected with the tine (2) by means of a quick-release device so that it can be quickly released.

## Revendications

1. Machine de travail du sol (1) possédant deux rangées de dents (10), munie de dents (2) qui sont équipées d'unités d'outils travaillant en largeur (3) avec des socs à ailettes (5), sachant que sont prévues des tôles de guidage (15) qui sont disposées à une distance du milieu (8) du soc à ailettes (5) à gauche et à droite du soc à ailettes (5),
**caractérisée par le fait**
**que** la machine de travail du sol (1) est équipée d'une rangée de dents avant (11) et d'une rangée de dents arrière (12) et que la distance (16) entre les tôles de guidage (15) d'une dent (2) avec les socs à ailettes (5) de la rangée de dents avant (11) est supérieure à la distance (17) entre les tôles de guidage (15) d'une dent (2) avec les socs à ailettes (5) de la rangée de dents arrière (12).

2. Machine de travail du sol selon la revendication 1,
**caractérisée par le fait**
**que** la distance (16) entre les tôles de guidage (15) de la rangée de dents avant (11) est entre 3 cm et 10 cm plus grande que la distance (17) entre les tôles de guidage (15) de la rangée de dents arrière (12), de préférence 4 cm à 8 cm.

3. Machine de travail du sol selon la revendication 1,
**caractérisée par le fait**
**que** les unités d'outils (3) avec socs à ailettes (5) à côté des tôles de guidage (15) consistent en une pointe de soc (4) et une tôle déflectrice (6) avoisinante.

4. Machine de travail du sol selon la revendication 1,
**caractérisée par le fait**
**que** les dents (2) d'une rangée de dents (10) sont autant que possible disposées sur une ligne (20) et présentent une distance (26) de 80 cm à 100 cm les unes par rapport aux autres.

5. Machine de travail du sol selon la revendication 1,
**caractérisée par le fait**
**que** la machine de travail du sol (1) est réalisée sous la forme d'un scarificateur avec deux poutres (13), sachant que les dents (2) de la rangée de dents avant (11) sont attribuées à la poutre avant (21) et les dents (2) de la rangée de dents arrière (12) à la poutre arrière (22) et que la distance (27) entre la rangée de dents avant (11) et la rangée de dents arrière (12) est d'au moins 70 cm.

6. Machine de travail du sol selon la revendication 1,
**caractérisée par le fait**
**que** la largeur de coupe du soc à ailettes (5) d'une dent (2) est supérieure à l'interrang (25) des dents (2).

7. Machine de travail du sol selon la revendication 1,
**caractérisée par le fait**
**que** le soc à ailettes (5) est composé de plusieurs pièces et de préférence en une pièce de soc gauche (18) et une pièce de soc droite (19).

8. Machine de travail du sol selon la revendication 1,
**caractérisée par le fait**
**que** les tôles de guidage (15) ont une forme croissant en biais vers l'arrière et détournant la terre vers le haut et vers le bas dans le sillon du soc.

9. Machine de travail du sol selon la revendication 1,
**caractérisée par le fait**
**que** les tôles de guidage (15) sont fabriquées revêtues d'une couche en plastique ou d'une couche en céramique.

10. Machine de travail du sol selon la revendication 1,
**caractérisée par le fait**
**que** sont prévus, entre les bandes de traitement des dents (2) de la rangée de dents arrière (12) et derrière la rangée de dents arrière (12), des outils d'égalisation aplanissant le sol, qui consistent de préférence en disques creux ronds ou dentés, qui sont disposés de façon décalée les uns par rapport aux autres, et qu'un rouleau est disposé derrière les disques creux, qui guide les dents (2) dans la profondeur de travail.

11. Machine de travail du sol selon la revendication 1,
**caractérisée par le fait**
**qu'**un pied de soc est attribué aux unités d'outils (3) avec pointe de soc (4), socs à ailettes (5) avec tôles de guidage (15) et tôle déflectrice (6), qui est relié à la dent (2) par le biais d'un dispositif de changement rapide de façon à pouvoir être rapidement changé.
